# EUROPEAN PATENT APPLICATION

(11) **EP 1 139 459 A1**
(43) Date of publication of application: **04.10.2001**
(21) Application number: 01108028.0
(22) Date of filing: 29.03.2001
(51) Int. Cl.: H01M 2/12

(54) **Seal type storage battery**

(30) Priority: 30.03.2000 JP 2000094296; 12.03.2001 JP 2001068336
(71) Applicant: Sanyo Electric Co., Ltd., Moriguchi-shi, Osaka-fu 570-8677 (JP)
(72) Inventor: Okumura, Nobuhito, Sumoto-city, Hyogo 656-0051 (JP); Nishimura, Satoru, Sumoto-city, Hyogo 656-0055 (JP); Tamagawa, Takuya, Mihara-gun, Hyogo 656-0521 (JP); Kakiuchi, Hisashi, Mihara-gun, Hyogo 656-0405 (JP); Katayama, Hiroki, Sumoto-city, Hyogo 656-0054 (JP); Inoue, Hiroyuki, Mihara-gun, Hyogo 656-0131 (JP); Fujisaka, Etsuya, Tsuna-gun, Hyogo 656-2131 (JP)
(74) Representative: Menges, Rolf, Dipl.-Ing.

(57) **Abstract**

A seal type storage battery has a battery case which has a sealing equipment to seal an opened portion of an outer case (22), which holds an electricity generating element. It has a pressure-sensitive conductive rubber (11) in the battery case, whose resistance is changed continuously depending on a rise of inner pressure of the battery case. A lead (12) connecting with the pressure-sensitive conductive rubber (11) is extended to outside from the battery case, and the lead (12) outputs a pressure detecting signal to outside.

## Description

This application is based on applications No. 94296 filed in Japan on Mar. 30, 2000 and No. 68336 filed in Japan on Mar. 12, 2001, the content of which incorporated hereinto by reference.

### BACKGROUND OF THE INVENTION

This Invention relates to a seal type storage battery such as a nickel-cadmium storage battery, a nickel metal hydride type storage battery or the like, especially improving a seal type storage battery having a pressure detector detecting inner pressure of the battery.

A seal type storage battery such as a nickel-cadmium seal type storage battery, a nickel metal hydride storage battery or the like produces oxygen gas at a positive electrode when close to charge up, and in some cases hydrogen gas is produced at a negative electrode, so that inner pressure of the battery increases. For this reason, this kind of batteries has a relief valve equipment, which exhausts the gas out of the battery when the inner pressure is beyond predetermined pressure and seals again when the inner pressure Is lower than the predetermined pressure after exhausting.

In this case, it occurs decrease of battery capacity due to decrease of electrolyte in accordance with the process of charge-discharge cycles. Therefore various charging methods preventing overcharge are employed. For example, it is employed that a method, so-called - delta-V method, controls the charge with detecting decreased voltage delta-V from a peak point in accordance with a phenomenon which charged voltage shows the peak point In end of charging. It is also employed that a method controls the charge with detecting surface temperature of the battery in accordance with phenomenon that the surface temperature increases with the process of the charge.

However the charged voltage depends on charging current or ambient temperature much, so that the -delta-V method described above has a problem that dispersion of the detected delta-V value occurs overcharge. On the other hand, the method that controls the charge with detecting the surface temperature of the battery described above can detects the difference of the temperature comparatively with accuracy when charging current is small, but the temperature in short time charging increases quickly so that the method has a problem that delaying to detect the increasing temperature occurs overcharge.

Therefore it was proposed that a method controls the charge by detecting a rise of inner pressure of the battery due to the charge, for example in Japanese Raid-Open Patent Publication No. TOKU-KAI-HEI 5-153,734 (1993), Japanese Raid-Open Patent Publication No. TOKU-KAI-HEI 5-36,442 (1993) etc. However in the method proposed in Japanese Raid-Open Patent Publication No. TOKU-KAI-HEI 5-153,734 (1993), a strain gauge is attached to the battery with adhesive to detect the inner pressure, and then deformation of the battery case is converted into variation of resistance so that its charging is controlled by detecting the variation of resistance. In this case, it has a problem that it cannot prevent overcharge sufficiently, since it cannot detect the inner pressure directly so that detection of the inner pressure delays, and sensitivity of the deteotlon depends on condition of the attachment of the strain gauge so that it cannot detect the inner pressure certainly.

On the other hand, in the method proposed in Japanese Patent Application HEI 5-3644, 1993, it has a problem that it cannot be used repeatedly when it cut the charging current directly in charging with huge amount of the charging current, since a detection signal detected by a pressure detector controls a switching device disposed in a charging circuit to cut the charging current directly so that the switching device can be broken. In addition, it is difficult that the pressure detector disposed in the trough operates stably for a long time, so that it makes difficult to detect its inner pressure with accuracy to protect the battery effectively. It causes that the detector is disposed under very hard circumstance such as hard variation of pressure or temperature, so that the detector is apt to aging. Further the detector is disposed under the circumstance to be exposed with electrolyte, which causes leakage.

Therefore to solve these problems mentioned above, the object of the present invention is to provide a seal type storage battery that can detect inner pressure of the battery caused by charging directly not to occur overcharge,

The above and further objects and features of the invention will more fully be apparent from the following detailed description with accompanying drawings.

### SUMMARY OF INVENTION

To achieve the objects mentioned above, the seal type storage battery of this invention has a pressure-sensitive conductive rubber whose resistance is changed continuously depending on a rise of inner pressure of the battery case is disposed in the battery case, a lead connecting with the pressure-sensitive conductive rubber which is disposed with extended to outside from the battery case, the lead disposed with extended to outside from the battery case outputs a pressure detecting signal,

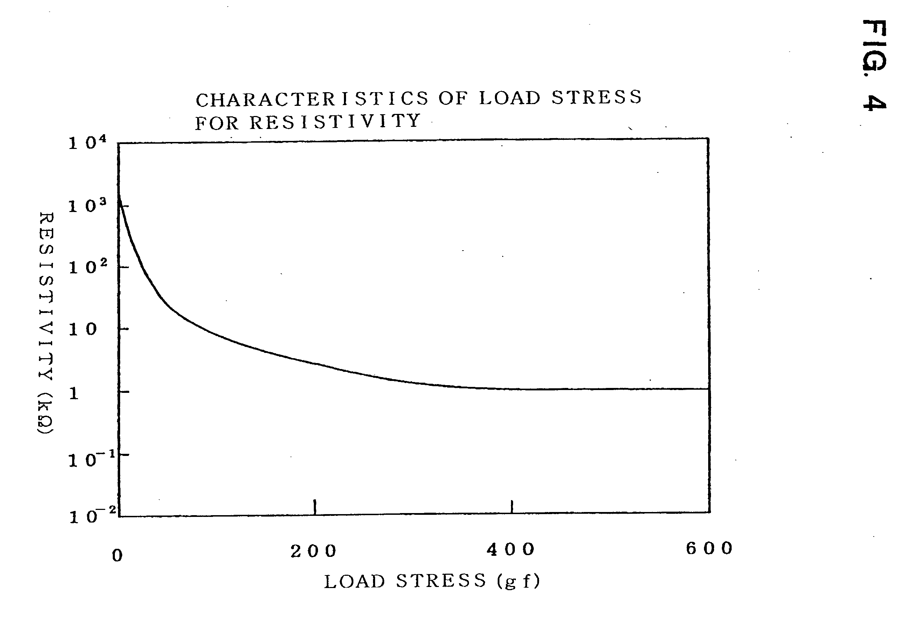

Since the seal type storage battery has the pressure-sensitive conductive rubber whose resistance is change continuously depending on the rise of inner pressure of a battery case so that the detection does not delay because the inner pressure can be output as the detecting signal immediately. In addition, the pressure-sensitive conductive rubber detecting the pressure has superior resistance for transmutation of pressure and temperature so that the structure can prevent its aging. Further, as shown in Fig. 4, the pressure-sensitive conductive rubber has a characteristics that Its resistivity changes in accordance with load (pressure) sensitively is so high that it can detect rise of the inner pressure with accuracy. Especially, the resistitvity is extremely sensitive in early stage at which load operates, so that the Increasing inner pressure can be detected more precisly. Further, the pressure-sensitive conductive rubber shows superior water-proof such that It can prevent the degradation caused by the electrolyte effectively. Accordingly, the seal type storage battery according to the present invention can detect the inner pressure of the battery with accuracy and immediacy using the pressure-sensitive conductive rubber thus it prevent overcharging for this type of battery for a long term with certainty. Further more, the seal type storage battery has the lead connecting with the pressure-sensitive conductive rubber, which is disposed in the battery case and extended to outside, so that simply connecting the extended lead from the battery case with the control circuit of the charging circuit can cut the charging current, it makes the connecting work between the seal type storage battery and charging circuit simple and easy.

In this case, the seal type storage battery according to the present invention has a sealing equipment which has a sealing sheet having an opened hole in the center and sealing an opened hole of the outer case via an insulative gasket and an electrode cap as an outer terminal fixed on the outer surface of the sealing sheet, and an alkali-resisting rubber sheet is disposed between the sealing sheet and the electrode cap, wherein the pressure-sensitive conductive rubber is disposed in the position of the opened hole of the sealing sheet and sandwiched between the alkali-resisting rubber sheet and the electrode cap, so that the pressure due to gas produced in the battery can convey to the pressure-sensitive conductive rubber via the alkali-resisting rubber. Therefore the gas pressure produced in the battery can be conveyed to the pressure-sensitive conductive rubber immediately, and then it is output to out side as the electrical signal via the lead connected with the pressure-sensitive conductive rubber in an Instant.

Thereby, the seal type storage battery connected with the charging circuit can prevent overcharge, since the lead connecting with the pressure-sensitive conductive rubber disposed outside of the battery connects with the control circuit of the charging circuit so that the charging current can be cut immediately when the inner pressure of the battery is beyond the predetermined pressure value. In addition, even the sealing sheet has the opened hole in the center of it, the alkali-resisting rubber seals the opened hole so that the internal battery is retrain in airtight therefore the pressure-sensitive conductive rubber is not exposed to the alkali-ambient of the internal battery,

In addition, the seal type storage battery may have a pressure-regulating valve equipment disposed between the sealing sheet which is a component of the sealing equipment and the electrode cap. The pressure-regulating valve equipment comprises a valve sealing the opened hole portion of the sealing sheet and an elastic body thrusting the valve to the opened hole. In the valve, the pressure-sensitive conductive rubber is disposed at position facing the opened hole portion of the sheet via an alkali-resisting rubber. The seal type storage battery can cut the charge current Immediately by detecting rise of the inner pressure of the battery with the pressure-sensitive conductive rubber disposed inside of the valve. Further, in the seal type storage battery, the pressure-regulating valve can exhaust the gas in the battery case to outside by opening the valve instantly, even the charge current cannot be cut immediately when the inner pressure rising because of error at the pressure-sensitive conductive rubber.

Further more, the seal type storage battery may seal the opened portion of the outer case with the sealing sheet via a insulative gasket.

### BRIEF DESCRIPTION OF THE DRAWINGS

Fig. 1 shows a cross section view of the process to produce the sealing equipment of the present invention having the pressure-sensitive conductive rubber.
Fig. 2 shows a cross section view of the finished sealing equipment of the present invention having the pressure-sensitive conductive rubber.
Fig. 3 shows a partial cross section view of the main part of the nickel-cadmium storage battery having the seal equipment of Fig. 2.
Fig. 4 shows the relationship of the pressure-sensitive conductive rubber of the present invention between compression pressure (load stress) and resistivity.
Fig. 5 shows a block diagram of the charging circuit to charge the seal type storage battery according to the present invention.
Fig. 6 shows a cross section view of the finished sealing equipment of another embodiment having the pressure-sensitive conductive rubber.
Fig. 7 shows a cross section view of the completed sealing equipment having the pressure-sensitive conductive rubber of another embodiment according to the present invention.
Fig. 8 shows a magnified cross section view of the valve of the sealing equipment shown in Fig. 7.
Fig. 9 shows a cross section view of the valve under pressure shown in Fig. 8.
Fig. 10 shows a cross section view of the completed sealing equipment having the pressure-sensitive conductive rubber of another embodiment according to the present invention.

### DETAILED DESCRIPTION OF THE INVENTION

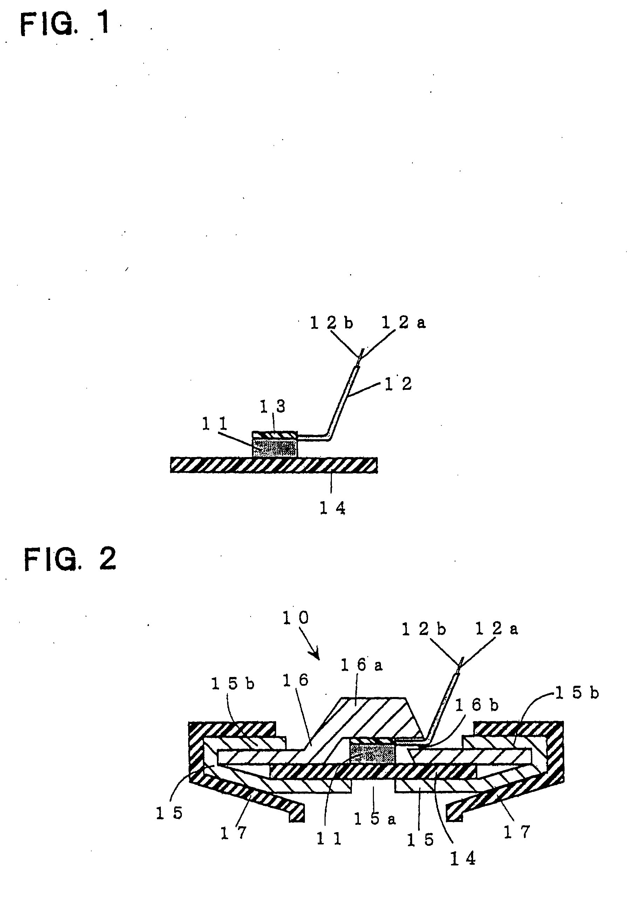

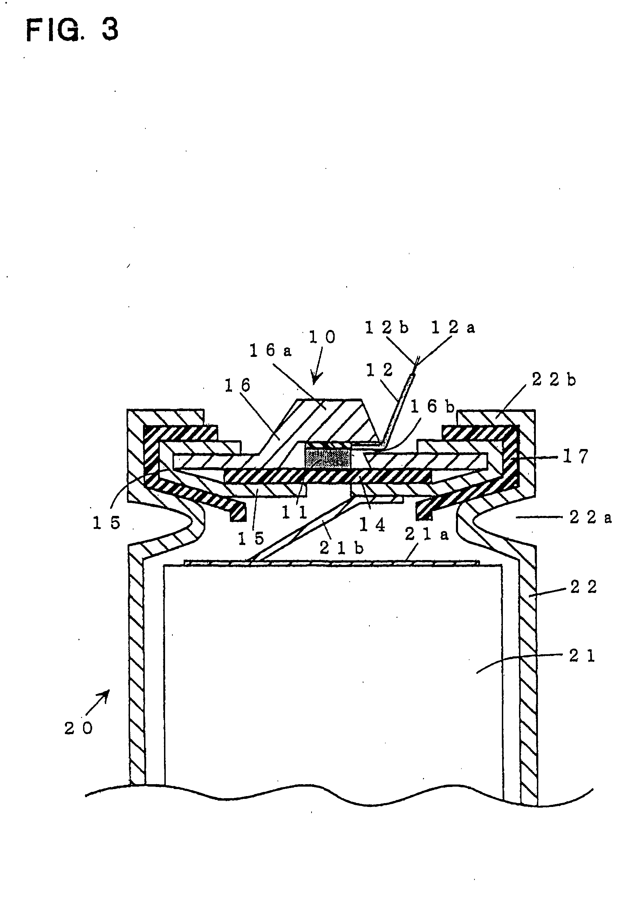

An embodiment of the present invention applying to the nickel-cadmium seal type storage battery is described with Fig. 1 - Fig. 3 below. Here, Fig.1 shows a cross section view of the process to produce the sealing equipment of the present invention having the pressure-sensitive conductive rubber, Fig. 2 shows a cross section view of the finished sealing equipment of the present invention having the pressure-sensitive conductive rubber, and Fig. 3 shows a partial cross section view of the main part of the nickel-cadmium storage battery having the sealing equipment of Fig. 2.

### 1.P roducing the sealing equipment

First, preparing a lead 12 having a pressure-sensitive conductive rubber 11 (for example Inastmar manufactured by inaba Rubber Inc.), covering covers one side of the pressure-sensitive conductive rubber 11 joined to the lead 12 with an Insulative sheet 13, attaching an alkali-resisting rubber (for example ethylene-propylene dlethylene rubber (EPDM)) sheet 14 attached to the other side not joined to the lead 12, then a pressure-sensor is produced. The pressure-sensitive conductive rubber 11 is mainly made of a pressure-sensitive conductive material having a character that decrease its resistivity in accordance with the Increase of the pressure (load stress) as shown in Fig. 4, And one side end of the lead 12 exposes a pair of core wire 12a, 12b.

Next, preparing a sealing sheet 15 with an opened hole 15a in the center, and a electrode cap 16 having a projection 16a in the center with a pierced hole 16b at its bottom, then disposing the pressure-sensor described above between the sealing sheet 15 and the electrode cap 16. In the battery of this embodiment, the electrode cap 16 explained as a positive electrode. In this case, after the lead 12 of pressure-sensor is inserted Into the pierced hole 16b of the electrode cap 16, disposing the pressure-sensitive conductive rubber 11 to position at the opened hole 15a of the sealing sheet 15. Subsequently, the pressure-sensitive conductive rubber 11 is sandwiched between the sealing sheet 15 via the alkali-resisting rubber 14 and the electrode cap 16 by caulking the periphery 15b of the sealing sheet 15 with bending. As described above, the pressure-sensitive conductive rubber 11 sandwiched between the sealing sheet 15 and the electrode cap 16 has an advantageous feature to locate at predetermined position with certain. Further, since the pressure-sensitive conductive rubber 11 Is disposed such that the opposite side of the surface facing the opened hole 15a is surface-contacting with the electrode cap16, the electrode cap 16 can firmly receive the load affecting to the surface facing to the opened hole 15a and detect the pressure with accuracy. Next, producing a sealing equipment 10 by attaching an Insulative gasket 17 to around the portion of the caulked sealing sheet 15.

### 2. Producing the nickel-cadmium storage battery

On the other hand, applying positive activating material slurry having a positive activating material mainly made of nickel hydroxide and adhesive on the both side of a core plate made of a punching metal, after drying, producing a nickel positive electrode plate by cutting it into a predetermined form. In addition, applying negative activating material slurry having a negative activating material mainly made of cadmium oxide and adhesive on the both side of a core plate made of a punching metal, after drying, producing a cadmium negative electrode plate by cutting it into a predetermined form,

Next, producing a rolled electrode agglomerate 21 by rolling these the nickel positive electrode and the cadmium negative electrode with a separator between of them in a roll shape, then welding a positive collector 21a onto the positive core plate exposed upper surface of the rolled electrode agglomerate 21, and welding a negative collector (not shown) onto the negative core plate exposed lower surface of the rolled electrode agglomerate 21. Next, disposing the rolled electrode agglomerate 21 into an outer case 22 formed in a drum shape having a bottom (the outside of the bottom is a negative electrode terminal) made of iron with nickel plating.

After then, spot-welding a positive collector lead 21b extended from the positive collector 21a to the bottom of the sealing sheet 15 of the sealing equipment 10 described above. Next, after forming a circular groove portion 22a by drawing to the upper outline part of the outer case 22, attaching the sealing equipment 10 into an opened portion of the outer case 22 with disposing the Insulative gasket 17 onto the circular groove portion 22a. Next, producing the nickel-cadmium storage battery 20 by caulking the opened edge portion 22b of the outer case 22 toward inside with sealing the battery.

### 3. Connecting with the charging circuit.

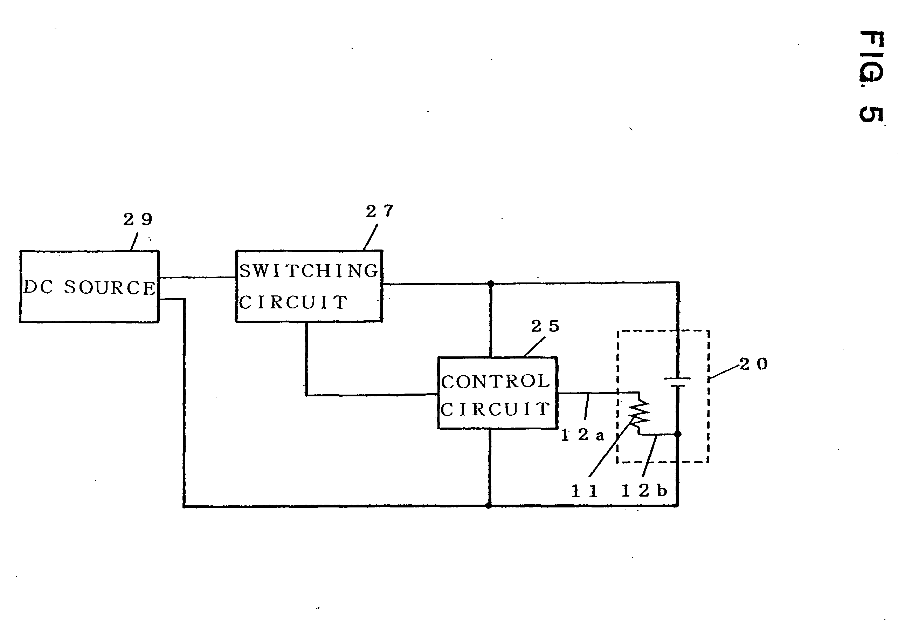

Next, an embodiment that disposes the nickel-cadmium storage battery 20 produced as mentioned above with connecting with a charging circuit is described with Fig. 5 below.

Here, the charging circuit has a DC source 29(also the DC source can be used a current source commutating an AC source) providing the charging current to the nickel-cadmium storage battery 20, a switching circuit 27 applying or cut the current source 29 to the nickel-cadmium storage battery 20, and a control circuit 25 judging whether the Inner pressure of the nickel-cadmium battery 20 is higher than a predetermined threshold or not and outputting a cutting signal to the switching circuit 27 when the inner pressure is higher than the threshold. The switching circuit 27 may be a switching device as a semiconductor device such as a transistor or FET or the like. The switching circuit 27 makes contact with AC current or cut the AC current with controlled by On or Off of the signal provided from the control circuit 25. The switching device applied to the semiconductor switching device can be used for a long term stably without breakdown even in use charging with high-current repeatedly. This is because the semiconductor switching device does not break due to the On and Off operation of switching, which differs from a switching device having mechanical contact.

When the nickel-cadmium storage battery 20 is connected with the charging circuit described above, connecting the positive side of the DC source with the projection (positive terminal) 16a of the electrode cap 16 of the nickel-cadmium storage battery 20 via the switching circuit, connecting the negative side of the DC source with the bottom (negative terminal) of the outer case 22. On the other hand, control circuit 25 connects with one core wire 12a of lead wire 12 which connects with the pressure-sensitive conductive rubber 11 and is extended from the pierced hole 16b of the electrode cap 16 to outside of the battery. The other core wire 12b is connected with connecting portion of the DC source 20 and the negative electrode of the battery 20. Therefore the battery 20 connects with the charging circuit.

### 4. Charge operation

Next, the operation of the charging circuit connecting with the storage battery 20 as mentioned above is described below. First, switching on a DC source switch (not shown) makes the switching circuit 27 on state, then the DC source 29 provides the charging current (constant current) with the battery 20. With keeping constant-current charging, the charged voltage rises, and when close to the end of charging, the inner pressure due to gas produced in the battery rises. When the inner pressure rises, the resisitivity of the pressure-sensitive rubber 11 drops as shown in Fig. 4.

Thereby, the voltage value through the pressure-sensitive rubber 11 decreases. The control circuit 25 does not output the detecting signal when the voltage value is higher than the predetermined threshold so that charging is kept, and output the detecting signal to the switching circuit 27 when the voltage value is lower than the threshold. Therefore, the switching circuit 27 is in off state so that the charging current is not provided with the battery 20. Accordingly the battery 20 Is prevented overcharge.

### 5. Another embodiment

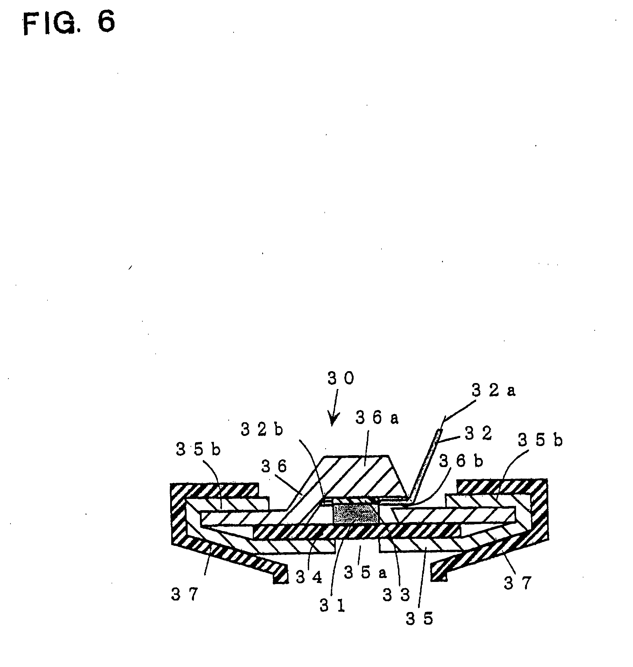

Although it is explained that the embodiment described above has the pressure-sensitive conductive rubber 11 sandwiched between the sealing sheet 15 via the alkali-resisting rubber 14 and the electrode cap 16, the pressure-sensitive conductive rubber can be disposed in the negative electrode side. In this case, as shown in Fig. 6, an insulative sheet 33 covers one side of a pressure-sensitive conductive rubber 31 joined to a lead 32, and an alkali-resisting rubber sheet 34 is attached to the other side not joined to the lead 32, then a pressure-sensor is produced. Next, the pressure sensor is disposed between a sealing sheet 35 and a electrode cap 36, in this sealing equipment 30, the electrode cap 36 explained as a negative electrode.

In this case, inserting one of a core wire 32a of the lead 32 extended from the pressure-sensitive rubber 31 into the pierced hole 36b of the electrode cap 36, and disposing the pressure-sensitive conductive rubber 31 to position at an opened hole 35a of the sealing sheet 35 after welding the other core wire 32b to the bottom of the projection 36a of the electrode cap 36. Subsequently, the pressure-sensitive conductive rubber 31 is sandwiched between sealing sheet 35 via the alkali-resisting rubber 34 and the electrode cap 36 by caulking the periphery 35b of the sealing sheet 35 with bending. Next, producing a sealing equipment 30 by attaching an insulative gasket 37 to around the caulked portion of the sealing sheet 35.

Next, welding a negative collector onto a rolled electrode agglomerate produced as same as described above, and welding a positive collector onto the lower surface of the rolled electrode agglomerate, then, disposing the rolled electrode agglomerate to be held into a cylindrical shaped and bottom closed outer case made of iron with nickel plating (in this case, the outer surface of the bottom is a positive electrode terminal). Consequently, spot-welding a positive collector lead extended from the negative collector to the bottom of the sealing sheet 35 of the sealing equipment 30, after forming a drawn portion by drawing to the upper outline part of the outer case, attaching the sealing equipment into an opened portion of the outer case with disposing the insulative gasket 37 onto the drawn portion. Next, producing the nickel-cadmium storage battery with sealing the battery by caulking the opened edge portion of the outer case toward inside.

In this another embodiment of the nickel-cadmium storage battery, the other side of the core wire 32b of the lead 32 extended from the pressure-sensitive rubber 31 is welded to the bottom of the projection of the electrode cap 36, so that the lead connecting with the control circuit 25 (See Fig. 5) of the charging circuit is only the one side of core wire 32a, it makes connecting work more easier.

Also, the sealing equipment 30 described above can be disposed in the bottom of the cylindrical outer case and a conventional sealing equipment can be disposed in the top of the outer case. In this case, the conventional sealing equipment has a structure that has a pressure-regulating valve having a valve to shut a hole for exhaust formed in center of a sealing sheet and a spring to thrust the valve, between the sealing sheet and a electrode cap which is a positive electrode. Thus disposing the conventional sealing equipment, the pressure-regulating valve can work even the pressure-sensitive conductive rubber 31 disposed In the sealing equipment 30 is not in operate, so that the safety of the battery is further improved.

As described above, according to the prevent invention the seal type storage battery has an alkali-resisting rubber sheet 14(34) between a sealing sheet 15(35) and an electrode cap 16(36), wherein a pressure-sensitive conductive rubber 11 (31) is disposed in position of an opened hole 15a(35a), which is an opened hole portion, on the sealing sheet 15(35) and sandwiched between the alkali-resisting rubber sheet 14(34) and the electrode cap 16(36), so that the pressure due to gas produced in the battery can convey to the pressure-sensitive conductive rubber 11(31) via the alkali-resisting rubber 14(34). Therefore the gas pressure produced in the battery can be conveyed Immediately, and then it is output to outside or the battery as an electrical signal via a lead wire 12(32), which is a lead, connected with the pressure-sensitive conductive rubber 11(31) In an Instant.

Thereby, connecting the lead 12(32) extended to the outside of the battery with a control circuit 25 of a charging circuit, so that the control circuit 25 can cut the charging current immediately with operation of a switching circuit 27 when the inner pressure of the battery is beyond a predetermined value Input in the control circuit 25. Therefore, the seal type storage battery 20 connected with the charging circuit can prevent overcharge,

### 6. Another embodiment

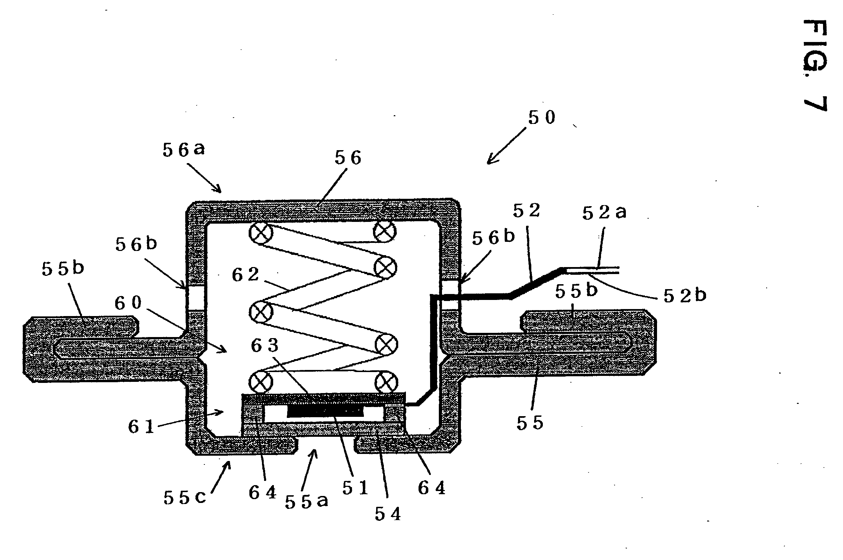

Further more, the sealing equipment of another embodiment according to the present Invention which has a pressure-sensitive conductive rubber and a pressure-regulating valve is shown in Fig. 7. The sealing equipment 50 shown in Fig. 7 has the pressure-regulating valve 60 having a valve 61 and an elastic body 62 between the sealing sheet 55 and electrode cap 56.

The sealing sheet 55 and the electrode cap 56 are produced with pressing metal sheet. The sealing sheet 55 has a projection 55c projecting below in center, and has opened hole 55a in the center area of the lower surface of the projection 55c. The electrode cap 56 has a projection 56a projecting upward in the center area. Here, the projection 56a is a positive electrode in this electrode cap 56. In addition, the electrode cap 56 has an opened pierced hole 56b in the side surface of the projection 56a. The pierced hole 56b serves as a port exhausting the gas in the battery case to outside when the pressure-regulating valve 60 operate, and also serves as a port to pull out the lead wire 52 connected with the pressure-sensitive conductive rubber 51 disposed inside of the valve 61 to outside. The sealing sheet 55 and the electrode cap 56 are laminated so as to form space inside by reentrant portion defined at their projections 55c and 55a, which are projecting upward and downward respectively, by facing each other so that the valve 61 and the elastic body 62 are disposed in this space formed inside. In the sealing equipment 50, after disposing the valve 61 and the elastic body 62 between the sealing sheet 55 and electrode cap 56, the sealing sheet 55 and the electrode cap 56 are coupled by bending and then caulking the periphery 55b of the sealing sheet 55. Altenatively the sealing sheet 55 and the electrode cap 56 may be connected by spot-welding at peripheral portion.

The pressure-regulating valve 60 opens the valve when the inner pressure of the battery case is higher than the predetermined pressure to prevent that the extremely high pressure breaks the outer case. The pressure-regulating valve 60 has the valve 61 which seals the opened hole 55a of the sealing sheet 55, and the elastic body 62 which apply a force to the valve 61 toward the opened hole 55a.

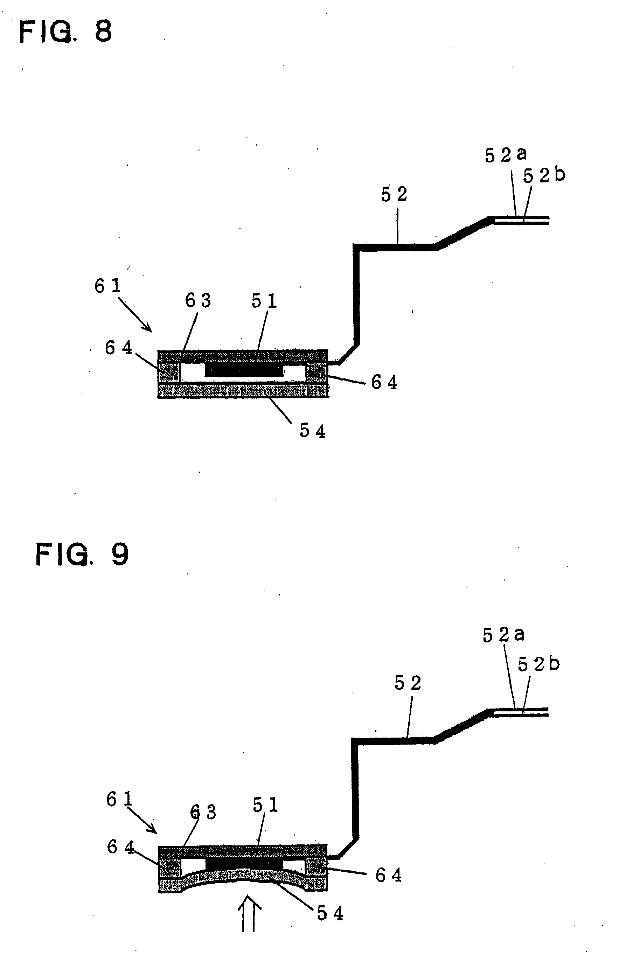

As shown a magnified cross section view in Fig. 8, the valve 61 has the pressure-sensitive conductive rubber 51 inside. The valve 61 shown in Fig. 8 has a sheet material 63 coupled with the lower end of the elastic body 62, a cylindrical body 64 fixed on the lower surface of the periphery of the sheet material 63, and the alkali-resisting rubber sheet 54 which is fixed on the bottom of the cylindrical body 64 and seals the bottom opening of the cylindrical body 64. The valve 61 disposes a pressure-sensitive conductive rubber 51 in the space formed with the sheet material 63, the cylindrical body 64 and the alkali-resisting rubber sheet 54. In the valve 61, the pressure-sensitive conductive rubber 51 is located at predetermined position by being fixed in the center portion of lower surface of the sheet material 63. The sheet material 63 is preferably made of hard plastic sheet or metal sheet. This type of the sheet material 63 reduces errors caused by responsibility of the pressure-sensitive conductive rubber 51 for the gas pressure. In addition, in the valve 61, the lead wire 52 connected with the pressure-sensitive conductive rubber 51 is pulled out to outside of the valve 61. The lead wire 52 is pulled out through the pierced hole 56b of the electrode cap 56 to outside of the battery. As shown in Fig. 7, the valve 61 is disposed at the position such that it seals the opened hole 55a of the sealing sheet 55 and the pressure-sensitive conductive rubber 51 faces the opened hole 55a. Therefore the pressure-sensitive conductive rubber 51 detects rise of the inner pressure of the battery. The pressure detecting signal detected by the pressure-sensitive conductive rubber 51 is outputted via the lead wire 52.

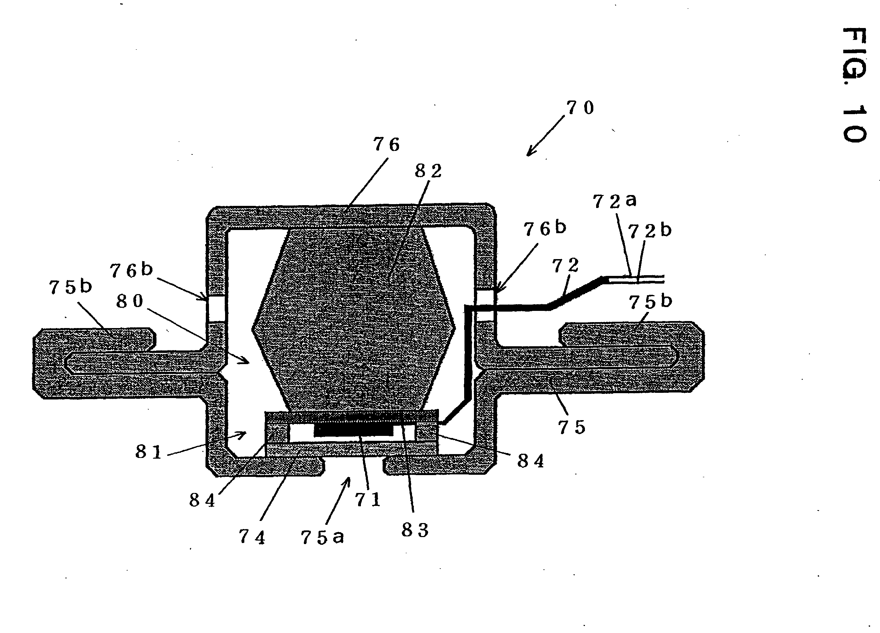

In addition, in the valve 61 shown in Fig. 8, the inner shape of the cylindrical body 64 is larger than the outer shape of the pressure-sensitive conductive rubber 51 such that the pressure-sensitive conductive rubber 51 does not contact the cylindrical body 64. As for the valve 61, the height of the cylindrical body 64 is higher than the thickness of the alkali-resisting rubber sheet 54 such that a gap is formed between the pressure-sensitive conductive rubber 51 and the alkali-resisting rubber sheet 54 not to contact the pressure-sensitive conductive rubber 51 with the alkali-resisting rubber sheet 54. The gap between the pressure-sensitive conductive rubber 51 and the alkali-resisting rubber sheet 54 is designed 0 - 2 mm, preferably 0.2 - 1 mm, most preferably 0,5 mm. In this valve 61, given the inner pressure of the battery rising and the alkali-resisting rubber sheet 54 compressed, as shown in Fig. 9, the alkali-resisting rubber sheet 54 is deformed and the pressure-sensitive conductive rubber 51 is compresses thereby the pressure is detected. In normal battery state, the surface of the pressure-sensitive conductive rubber 51 does not contact with the cylindrical body 64 or the alkali-resisting rubber sheet 54, so that the valve 61 of this structure can prevent error detection of the inner pressure certainly. Also, the pressure-sensitive conductive rubber 51 may be disposed with contacting with the cylindrical body 64 or the alkali-resisting rubber sheet 54.

One end of the elastic body 62 is joined to the valve 61, the other end is joined to the bottom of reentrant potion of the electrode cap 56. The elastic body 62 impels the valve toward the opened hole 55a. The elastic body 62 shown in the figure is a coil spring with elastic line-shaped material. The elastic body 62 using a spring is fixed to the valve 61 and the electrode cap 56 by welding or adhering. Thus the elastic body 62 disposed between the sealing sheet 55 and the electrode cap 56 disposes the valve 61 to predetermined position, and seals the opened hole 55a with pussing and compressing the valve 61 to the bottom of reentrant potion of the sealing sheet 55. The elastic body 62 has optimal elastic force to open the valve with moving the valve 61 when the inner pressure of the battery is higher than predetermined pressure.

In addition, another embodiment in which a rubbery elastic body applies the elastic body is shown in Fig. 10. The sealing equipment 70 shown in Fig, 10 has the pressure-regulating valve 80, which has the valve 81 having the pressure-sensitive conductive rubber 71 inside and the elastic body 82 which is the rubbery elastic body, between the sealing sheet 75 and the electrode cap 76. In the valve 81, the pressure-sensitive conductive rubber 71 is fixed to the lower surface of the sheet material 83 joined to the lower end of the elastic body 82, and disposed in the space formed with the sheet material 83, the cylindrical body 84 and the alkali-resisting rubber sheet 74. The valve 81 is disposed to seal the opened hole 75a of the sealing sheet 75 via the elastic body 82. For example, the rubbery elastic body, which is the elastic body 72, can be fixed to predetermined position with adhered to the valve 81 and the electrode cap 76. The lead wire 72 connected with the pressure-sensitive conductive rubber 71 is extended from the pierced hole 76b of the electrode cap 76 to outside of the battery, and outputs the pressure detecting signal detected in the pressure-sensitive conductive rubber 71. In the sealing equipment 70, the sealing sheet 55 and the electrode cap 56 are also coupled by caulking the periphery 75b of the sealing sheet 75 with bending.

Although it is not shown, the sealing equipment shown in Fig. 7 and Fig. 10 is attached to the opened portion of the outer case after the insulative gasket is attached to periphery of the calked portion of the sealing sheet. Then sealing the battery by caulking the opened edge portion of the outer case toward inside. In addition, as shown in Fig. 7 and Fig. 10, connecting the lead wire 52 (72) extended from the pierced hole 56b (76b) of the electrode cap 56 (76) to outside of the battery with the charge circuit (not shown). Connecting one core wire 52a (72a) of the lead wire 52 (72) with the control circuit of the charge circuit, connecting another core wire 52b (72b) with the connector of the power source and the negative electrode of the battery.

Although it is not shown, in addition, when the electrode cap be used as negative electrode, one lead wire can be extended from the pierced hole of the electrode cap to outside of the battery, and another core wire of the lead wire can be connected electrically in the electrode cap with welding or the like, in the sealing equipment. The seal type storage battery makes connecting work easier, cause only one core wire of the lead wire extended to outside should be connected with the control circuit of the charge battery.

The sealing equipment described above outputs the pressure detecting signal to the charge circuit via the lead extended to outside with detecting ride of the inner pressure of the battery by the pressure-sensitive conductive rubber disposed inside of the valve. The control circuit of the charge circuit cuts the charge current to prevent overcharge in the seal type storage battery, when the inner pressure of the battery becomes higher than the predetermined pressure. In addition, the sealing equipment prevents the inner pressure of the battery becomes extremely high pressure with the pressure-regulating valve opening the valve, even the control circuit does not cut the charge current in some reasons when the inner pressure is higher than the predetermined pressure. Therefore, predetermined pressure with the pressure-regulating valve opening is set higher than the predetermined pressure with the control circuit cutting the charge current.

States of the battery attached the sealing equipment described above, in which the charge current is cut by the pressure detecting signal from the pressure-sensitive conductive rubber and the gas is exhausted by the pressure-regulating valve with opening the valve, was experimented below.

### [Example 1]

The batteries A-D (500mAh) having the sealing equipment shown in Fig. 7 were produced. The inner pressure to stop charging with the pressure detecting signal detected by the pressure-sensitive conducting rubber were set 0.6 MPa, 0.8 MPa, 1.0 MPa and 1.2 MPa respectively. In addition, in the batteries A-D, the inner pressure to operate the pressure-regulating valve opening the valve was set 1.5 MPa. These batteries were charged with the charge current 10 A. The charge current of all batteries A-D were cut when the inner pressure of the batteries became each of the predetermined pressure, which were 0.6 MPa, 0.8 MPa, 1.0 MPa and 1.2 MPa respectively.

### [Example 2]

Next, in the batteries A-D, the control circuit which stops charging with the pressure detecting signal detected by the pressure-sensitive conducting rubber turned off, and these batteries A-D were charged with the charge current 10 A. It was confirmed that the gas was exhausted by the pressure-regulating valve with opening the valve, when the inner pressure became 1.5 MPa or over 1.5 MPa.

Here, in the embodiments described above, although the present invention is explained to apply to the nickel-cadmium storage batteries, this invention can also apply to a nickel metal hydride seal type storage battery or the like.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within meets and bounds of the claims, or equivalence of such meets and bounds thereof are therefore intended to be embraced by the claims.

## Claims

1. A seal type storage battery having a battery case which has an opened portion to hold an electricity generating element, and a sealing equipment sealing the opened portion in airtight,
**characterized in that**
a pressure-sensitive conductive rubber whose resistance is changed continuously depending on a rise of inner pressure of the battery case is disposed in the battery case,
a lead connecting with the pressure-sensitive conductive rubber which is disposed with extended to outside from the battery case,
the lead disposed with extended to outside from the battery case outputs a pressure detecting signal.

2. The seal type storage battery according to claim 1,
**characterized in that**
the pressure-sensitive conductive rubber is mainly made of a pressure-sensitive material whose resisitivity decreases with increasing of the pressure stress adding thereto.

3. The seal type storage battery according to claim 1
**characterized in that**
one of the lead attached to the pressure-sensitive rubber connects with a negative electrode.

4. The seal type storage battery according to claim 1,
**characterized in that**
one of the lead attached to the pressure-sensitive rubber connects with a positive electrode.

5. The seal type storage battery according to claim 1,
**characterized in that**
the sealing equipment has a sealing sheet having a opened hole portion in the center, an electrode cap having an outer terminal fixed on the outer surface of the sealing sheet,
the pressure-sensitive conductive rubber is disposed between the sealing sheet and the electrode cap.

6. The seal type storage battery according to claim 5,
**characterized in that**
a rubber sheet seals the opened hole portion of the sealing sheet in airtight, the pressure-sensitive conductive rubber is disposed between the rubber sheet and the electrode cap.

7. The seal type storage battery according to claim 6,
**characterized in that**
the rubber sheet is an alkali-resisting rubber sheet.

8. The seal type storage battery according to claim 7,
**characterized in that**
the rubber sheet is made of ethylene-propylene diethylene rubber,

9. The seal type storage battery according to claim 5,
**characterized in that**
the sealing sheet seals the opened portion of the outer case via a insulative gasket.

10. The seal type storage battery according to claim 1,
**characterized in that**
the seal type storage battery is a nickel-cadmium battery.

11. The seal type storage battery according to claim 1,
**characterized in that**
the seal type storage battery Is a nickel metal hydride battery

12. The seal type storage battery according to claim 1,
**characterized in that**
the sealing equipment having the pressure-sensitive conductive rubber inside is disposed in the bottom of the outer case.

13. The seal type storage battery according to claim 12,
**characterized in that**
the sealing equipment having a pressure-regulating valve seals off the opened portion of the outer case.

14. The seal type storage battery according to claim 1,
**characterized in that**
the sealing equipment has a sealing sheet having a opened hole portion in the center, an electrode cap having an outer terminal fixed on the outer surface of the sealing sheet, and a pressure-regulating valve equipment disposed between the sealing sheet and the electrode cap,
the pressure-regulating valve equipment has a valve sealing the opened hole portion and an elastic body thrusting the valve to the opened hole,
the pressure-sensitive conductive rubber is disposed at position of the valve facing the opened hole portion of the sealing sheet.

15. The seal type storage battery according to claim 14,
**characterized in that**
the valve has a sheet material joined to the elastic body, cylindrical body fixed to periphery of lower surface the sheet material, and a rubber sheet sealing opened edge portion of the cylindrical with fixed to the lower surface of the cylindrical body,
the pressure-sensitive conductive rubber is disposed in the space formed with the sheet material, the cylindrical body and the rubber sheet.

16. The seal type storage battery according to claim 15,
**characterized in that** the pressure-sensitive conductive rubber is disposed with a gap between the rubber sheet.

17. The seal type storage battery according to claim 15,
**characterized in that**
the rubber sheet is a alkali-resisting rubber sheet.

18. The seal type storage battery according to claim 17,
**characterized in that**
the rubber sheet is made of ethylene-propylene diethylene rubber.

19. The seal type storage battery according to claim 14,
**characterized in that**
the elastic body Is a coil spring with elastic line-shaped material,

20. The seal type storage battery according to claim 14,
**characterized in that**
the elastic body Is a rubbery elastic body.

21. The seal type storage battery according to claim 14,
**characterized in that**
the sealing sheet seals the opened portion of the outer case via a insulative gasket.
